(19) Europäisches Patentamt
European Patent Office
Office européen des brevets

(11) **EP 2 886 241 B1**

(12) **EUROPEAN PATENT SPECIFICATION**

(45) Date of publication and mention
of the grant of the patent:
**24.02.2021 Bulletin 2021/08**

(51) Int Cl.:
*B23K 26/20* (2014.01)   *B23K 9/127* (2006.01)
*B23K 9/16* (2006.01)   *B23K 9/173* (2006.01)
*B23K 26/073* (2006.01)   *B23K 26/14* (2014.01)
*B23K 33/00* (2006.01)   *B23K 26/24* (2014.01)
*B23K 9/02* (2006.01)   *B23K 9/025* (2006.01)

(21) Application number: **13831592.4**

(22) Date of filing: **16.08.2013**

(86) International application number:
**PCT/JP2013/004872**

(87) International publication number:
**WO 2014/030325 (27.02.2014 Gazette 2014/09)**

(54) **WELDING SYSTEM AND WELDING METHOD**

SCHWEISSSYSTEM UND SCHWEISSVERFAHREN

SYSTÈME DE SOUDAGE ET PROCÉDÉ DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.08.2012 JP 2012181815**

(43) Date of publication of application:
**24.06.2015 Bulletin 2015/26**

(73) Proprietor: **Kabushiki Kaisha Toshiba
Minato-ku
Tokyo 105-8001 (JP)**

(72) Inventors:
• **GOTO, Yu**
**Tokyo 105-8001 (JP)**
• **MAKINO, Yoshinobu**
**Tokyo 105-8001 (JP)**
• **MINEMURA, Toshiyuki**
**Tokyo 105-8001 (JP)**
• **KANAHARA, Toshio**
**Hiroshima-shi,**
**Hiroshima 731-0112 (JP)**
• **ARAKI, Shota**
**Tokyo 105-8001 (JP)**

(74) Representative: **Henkel & Partner mbB
Patentanwaltskanzlei, Rechtsanwaltskanzlei
Maximiliansplatz 21
80333 München (DE)**

(56) References cited:
JP-A- S60 216 986   JP-A- S62 183 986
JP-A- 2004 298 896   JP-A- 2006 224 130
JP-A- 2007 000 920   JP-A- 2007 054 879
JP-A- 2007 054 879   JP-A- 2007 283 363
JP-A- 2010 172 911   JP-A- 2010 172 911
US-A1- 2004 026 388

**Description**

TECHNICAL FIELD

Embodiments described herein relate generally to a welding system and a welding method.

BACKGROUND

For producing a large structure (for example, a reactor core internal structure for nuclear power generation), a pair of thick plates (stainless steel) may be butted against each other with a narrow groove therebetween and welded together in some cases (narrow groove welding). Here, a welding apparatus that laser-welds the thick plates with a narrow groove therebetween is disclosed (refer to Patent Document 1).

RELEVANT REFERENCES

Patent Reference

Reference 1: JP-A 2011-005533

*Furthermore,* US 2004 026388 A1 (Basis for the preamble of claims 1 and 8 respectively) *discloses an apparatus, in particular a laser hybrid welding head for a laser hybrid welding process, in which a laser or laser optics or an optical focusing unit and elements of a welding torch for an arc welding process and/or a feed device for a welding wire as well as a device for generating a cross jet connected by at least an incoming line and an outgoing line to a compressed air supply system, are mounted on at least one mounting element. The incoming line and the outgoing line carrying compressed air for the cross jet are disposed between the two components, in particular the laser and laser optics or the optical focusing unit and the elements of the welding torch or feed device for the welding wire.*

JP 2007 054879 A *discloses a hybrid welding equipment in which welding work is conducted in a combination of a 1st welding and a 2nd welding. The hybrid welding equipment is provided with: an image capturing means for capturing the image of a material to be welded; an image processing means for integrating and smoothing a plurality of images captured by the image processing means; and a welding controlling means for controlling the 1st welding and the 2nd welding according to the image processed by the image processing means.*

EP 226976481 *discloses a laser narrow groove welding apparatus using a laser beam with varying bean size, so as to periodically repeating irradiating only the bottom of the groove and periodically repeating irradiating the bottom of the groove and the side-walls. The laser beam is used to fuse a welding rod.*

SUMMARY

PROBLEMS TO BE SOLVED BY THE INVENTION

However, it is difficult to increase a penetration amount, so that the welding speed is not always sufficient in the laser welding. In the narrow groove welding for the large structure, TIG welding is often used in relation to the welding quality and the like, but its welding speed is not always sufficient.
When using MIG welding, the welding speed is increased but arc becomes instable, so that the welding quality is apt to deteriorate (incomplete fusion at groove side parts and a stack boundary (between stacked weld beads)).
Here, it is possible to add an oxidizing gas ($O_2$ or the like) to a shield gas to thereby stabilize the arc (MAG welding). However, the oxidizing gas oxidizes the weld bead, causing a possibility that removal or the like of oxide scale becomes necessary and welding strength decreases.

An object of the present invention is to provide a welding system and a welding method, easily achieving both a welding quality and a welding speed in narrow groove welding.

MEANS FOR SOLVING THE PROBLEMS

*The above object is achieved by means of a welding system according to claim 1 and a welding method as described in claim 8. The dependent claims are directed to different advantageous aspects of the invention.*

A welding system in an embodiment includes at least: a laser head that emits laser light having a processing point beam diameter larger than a width of a groove between a pair of welding objects butted against each other with a narrow groove therebetween; a welding torch that applies a voltage to a welding wire to perform arc welding; an interval adjusting mechanism that adjusts an interval between the laser head and the welding torch; and a moving unit that moves the laser head and the welding torch with the interval therebetween adjusted, along the groove so that the laser light emitted from the head melts an inside of the groove and the welding torch arc-welds the melted inside of the groove to form a weld bead.

EFFECT OF THE INVENTION

According to the present invention, it is possible to provide a welding system and a welding method, easily achieving both a welding quality and a welding speed in narrow groove welding.

BRIEF DESCRIPTION OF THE DRAWINGS

[Fig. 1] is a diagram illustrating a welding system 100 according to an embodiment.
[Fig. 2] is a cross-sectional view illustrating a welding object 10.
[Fig. 3] is a cross-sectional view illustrating a welding object 10a.
[Fig. 4] is a view illustrating details of the welding object 10, a laser head 110, and a welding torch 210.
[Fig. 5] is a view of the welding object 10 seen from a Z-axis positive direction.
[Fig. 6] is a longitudinal sectional view of a shield member 310.
[Fig. 7] is a transverse sectional view of the shield member 310.
[Fig. 8] is a view illustrating a profile PP of a groove 13.
[Fig. 9] is a view illustrating a technique of finding a groove width W1 from the profile PP of the groove 13.
[Fig. 10] is a view illustrating a positional relationship between the groove 13 and a welding wire WW.
[Fig. 11] is a cross-sectional view illustrating the welding object 10 during welding processing.
[Fig. 12] is a cross-sectional view illustrating the welding object 10 during welding processing.
[Fig. 13] is a cross-sectional view illustrating the welding object 10 during welding processing.
[Fig. 14] is a cross-sectional view illustrating the welding object 10 during welding processing.
[Fig. 15] is a cross-sectional view illustrating the welding object 10 during welding processing.
[Fig. 16] is a cross-sectional view illustrating the welding object 10 during welding processing.
[Fig. 17] is a cross-sectional view illustrating the welding object 10 during welding processing.
[Fig. 18] is a cross-sectional view illustrating the welding object 10 during welding processing.
[Fig. 19] is a cross-sectional photograph showing the welding object 10 during welding processing.
[Fig. 20] is a graph illustrating an example of a relationship between the groove width W1 and an input heat amount P.
[Fig. 21] is a cross-sectional view illustrating the welding object 10 during welding processing according to Comparative Example.

DETAILED DESCRIPTION

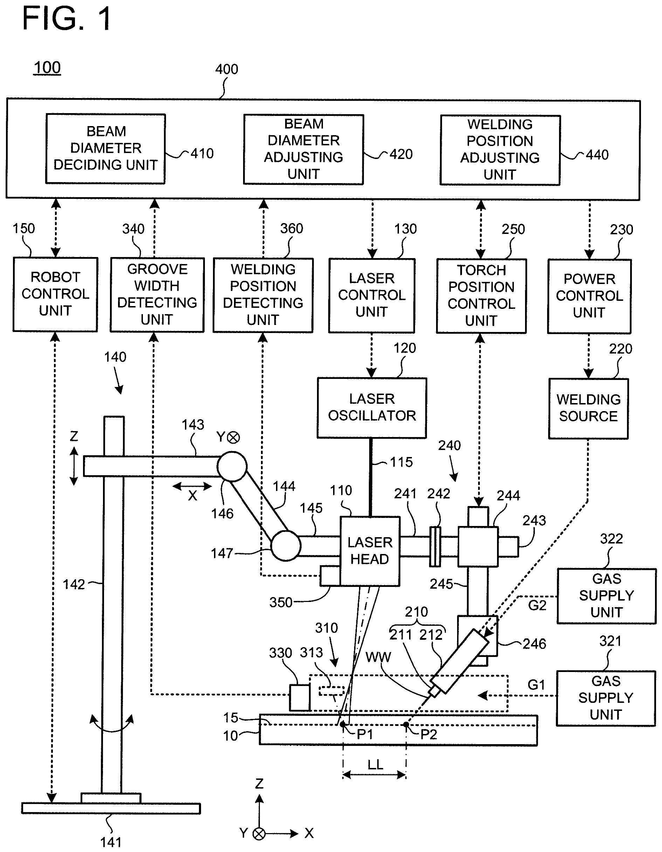

Hereinafter, details of an embodiment will be described referring to the drawings. A welding system 100 according the embodiment is a system (hybrid system) that welds a welding object 10 by laser and arc discharge.
As illustrated in Fig. 1, the welding system 100 according to the embodiment has a laser head 110, a laser oscillator 120, a laser control unit 130, a robotic device 140, a robot control unit 150, a welding torch 210, a welding source 220, a power control unit 230, a torch moving mechanism 240, a torch position control unit 250, a shield member 310, shield gas supply units 321, 322, a distance meter 330, a groove width detecting unit 340, an imaging device 350, a welding position detecting unit 360, and a main control device 400.
The welding object 10 is composed of a pair of stainless steel thick plates butted against each other with a narrow groove (narrow gap) therebetween. The narrow groove (narrow gap) means, for example, a clearance (groove) having a small angle made by opposing end portions of the thick plates or bring them into contact with each other at a small interval as compared with the plate thickness.

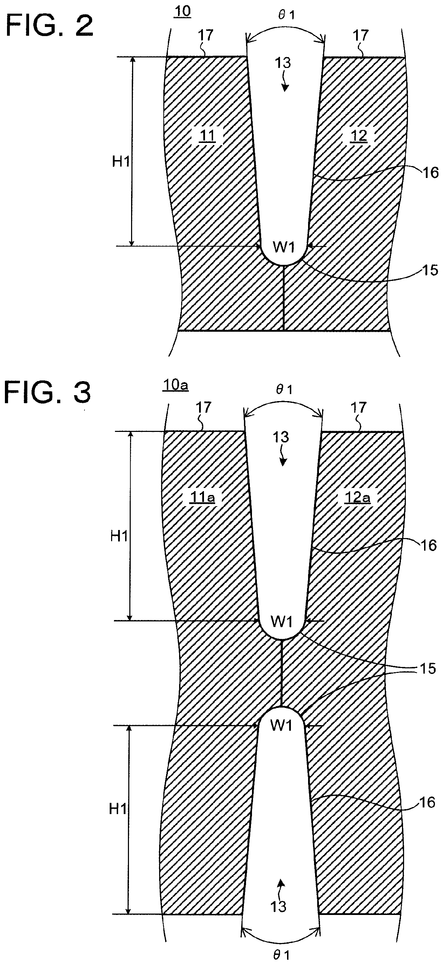

Fig. 2, Fig. 3 are cross-sectional views illustrating welding objects 10, 10a. Base materials 11, 12 such as the thick plates or the like are arranged such that their end faces have a clearance (groove (gap)) 13 therebetween and their lower ends come into contact with each other. The inside of the groove 13 is divided into a bottom part 15 and side parts 16. Outside the groove 13 is upper parts 17 of the base materials 11, 12.
The base materials 11, 12 are thick plates of stainless steel (for example, austenitic stainless steel). Note that as the base materials 11, 12, carbon steel, low-alloy steel, non-ferrous alloy are also usable.
The welding object 10 has the groove 13 only at the upper parts 17, so that welding only needs to be performed on the upper parts 17. The welding object 10a has grooves 13 at both upper and lower surfaces, so that welding is performed on both the upper and lower surfaces.
Here, the narrow groove is defined as a groove for which one pass-one layer welding can be performed. More specifically, a groove can be defined as the narrow groove when the following conditions are satisfied for a thickness H1 of the base materials 11, 12 and an interval W1 between the base materials 11 and 12 of the grove 13 at the bottom part 15.

When H1 ≤ 100 mm, W1 ≤ 20 mm
When H1 > 100 mm, W1 ≤ 30 mm

At this time, an angle θ1 formed between the side parts 16 (base materials 11, 12) of the groove 13 is small, for example, 20° or less.

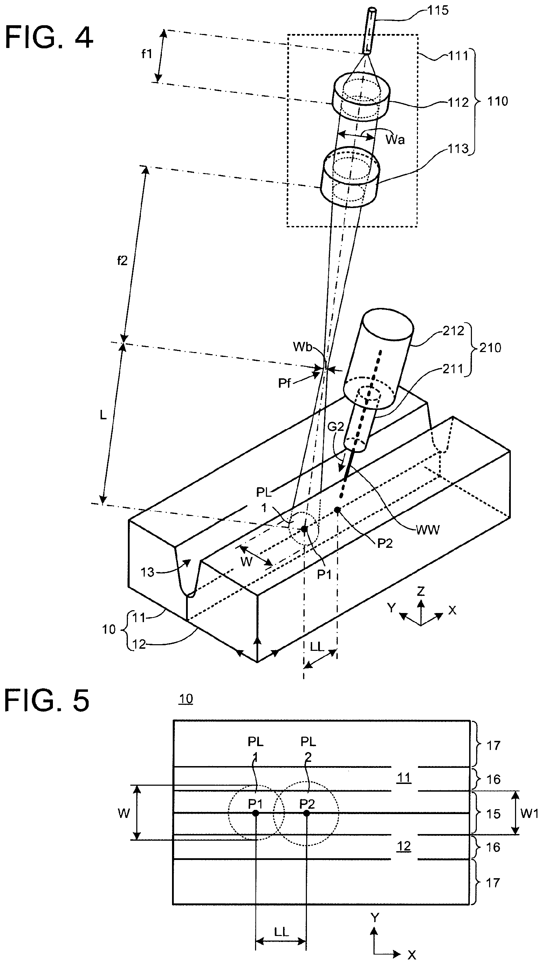

Fig. 4 illustrates details of the laser head 110 of a fiber laser and the welding torch 210. Besides, Fig. 5 is a view of the welding object 10 seen from a Z-axis positive direction.

The laser head 110 condenses beams of laser light to the welding object 10. The laser head 110 has a case 111, a collimator lens 112, and a condenser lens 113 and radiates the laser light from the laser oscillator 120 to the welding object 10 via an optical fiber 115.

The case 111 houses the collimator lens 112 and the condenser lens 113. The collimator lens 112 has a focal distance fl and converts the laser light emitted from an end portion of the optical fiber 115 into collimated light.

The condenser lens 113 has a focal distance f2, converts the collimated light from the collimator lens 112 into convergent light, and condenses it to the welding object 10. The laser light is condensed at a focal point Pf at the distance f2 from the condenser lens 113, and then spreads and is radiated as a laser spot with a processing point beam diameter W at a processing point P1 of the welding object 10.

Note that the processing point P1 of the welding object 10 is arranged inside the shield member 310 filled with shield gas G1 so as to be prevented from oxidation and so on.

The beam diameter (processing point beam diameter) W at the processing point P1 of the welding object 10 is set to be larger than the groove width W1 of the welding object 10. Setting a certain degree of length L from the focal point Pf to the processing point P1 (displacing the focal point Pf from the processing point P1) makes it possible to make the processing point beam diameter W larger than the groove width W1. When the groove width W1 is 8 mm, the processing point beam diameter W is set to, for example, 10 mm

The following Expression (1) is established between the defocusing length L and the processing point beam diameter W.

$$L = f2 \times (W - Wb)/(Wa - Wb)$$

$$Wb = \lambda/(2\,\pi\,NA) \times f2/f1 \qquad \ldots \text{Expression (1)}$$

L: defocusing length (mm)
W: processing point beam diameter (mm)
Wa: beam diameter (mm) at incidence on the condenser lens 113
Wb: beam diameter (mm) at the focal point Pf (spot diameter)
λ: wavelength of the laser light (mm)
NA: NA value of the optical fiber 115
fl: focal distance (mm) of the collimator lens 112
f2: focal distance (mm) of the condenser lens 113

According to the present invention, by making the processing point beam diameter W larger than the groove width W1, not only the bottom part 15 but also the side parts 16 of the groove 13 are irradiated with the laser light, and a part of the welding object 10 is melted to form a pool PL1. The bottom part 15 and the side parts 16 of the groove 13 are melted to improve penetration during subsequent arc welding, thereby preventing occurrence of incomplete fusion of the side parts 16.

Note that the factors influencing the size of the pool PL1 are the processing point beam diameter W, a laser output, and a welding speed among which the processing point beam diameter W most greatly influences the size. Note that adjusting the laser output and the welding speed makes it possible to melt the side parts 16 even if the processing point beam diameter W is smaller than the groove width W1.

Note that, in this embodiment, since the processing point beam diameter W is made larger, the intensity of the laser light per unit area of the welding object 10 becomes lower, resulting in a wide and shallow pool PL1 unlike a so-called keyhole welding. In the keyhole welding, the welding object 10 is placed in the vicinity of the focal point of the laser light so that a narrow and deep hole (keyhole) is formed in a welding object.

Here, the focal point Pf is set between the laser head 110 and the welding object 10 (the length L is positive) to make the processing point beam diameter W larger. In contrast, the welding object 10 may be arranged between the laser head 110 and the focal point Pf (the length L is negative) to make the processing point beam diameter W larger.

By adjusting the length L, the processing point beam diameter W can be changed. By changing the height in a Z-axis direction of the laser head 110 by the robotic device 140, the length L can be adjusted as will be described later.

In the case of multi-layer welding for the welding object 10, the groove width W1 increases as the welding proceeds. More specifically, since the groove 13 spreads having the angle θ1, the groove width W1 also increases as the number of layers increases, such as from the first layer to the second layer, and it is therefore preferable to increase the processing point beam diameter W along with the increase in the groove width W1. For example, it is possible to increase the height in the Z-axis direction of the laser head 110 according to the number of layers to be welded so as to increase the processing point beam diameter W.

The laser light is not vertically incident on the welding object 10 but incident at a given angle. The reason why the angle is given is to prevent the laser light reflected by the welding object 10 from being incident again on the laser head 110 to damage the laser head 110.

Note that the laser light reflected by the welding object 10 is received by the shield member 310 as described later, whereby the laser light is prevented from leaking to the surroundings of the welding object 10.

The laser oscillator 120 is a light source of the laser and sends the laser light into the laser head 110 via the optical fiber 115. Here, as the laser oscillator 120, a fiber laser is used. For the laser oscillator 120, a YAG laser, a Disk laser, a $CO_2$ laser may be used.

The laser control unit 130 is a control device that controls the output of the laser oscillator 120. Setting an appropriate laser output to the processing point beam diameter W makes it possible to set an appropriate penetration depth in the welding object 10.

The robotic device 140 is a moving device that moves the laser head 110 in X-, Y- and Z-directions and can set the laser head 110 at an appropriate height with respect to the welding object 10 and move (scan) the laser head 110 along the groove of the welding object 10. Scanning the laser head 110 (and the welding torch 210) a plurality of times along the groove enables multi-layer welding for the welding object 10.

The robotic device 140 functions as a moving unit that moves the laser head and the welding torch with the interval therebetween adjusted, along the groove so that the laser light emitted from the head melts the inside of the groove and the melted inside of the groove is arc-welded by the welding torch to form a weld bead.

The robotic device 140 has a base 141, arms 142 to 145, and joints 146, 147. The base 141 is arranged on the floor and holds the robotic device 140. The arm 142 is connected to the base 141 to be rotatable (rotatable using a Z-axis as a rotation axis). The arm 143 is connected to the arm 142 to be movable in the X- and Z-directions. The arm 144 is connected to the arm 143 at the joint 146 and rotatable. The arm 145 is connected to the arm 144 at the joint 147 and rotatable.

The laser head 110 is fixed to the arm 145. As a result, the laser head 110 becomes movable and rotatable in the X-, Y- and Z-directions by means of the arms 142 to 145. The base 141, the arms 142 to 145, and the joints 146, 147 include motors (not illustrated) that enable such movement and rotation and detectors (not illustrated) that detect position and direction.

The robot control unit 150 controls the robotic device 140 to change the position (coordinates (X, Y, Z)) and the direction of the laser head 110 to thereby adjust the position and so on of the focal point Pf to the welding object 10. The robot control unit 150 includes teaching data for continuously controlling the coordinates and the direction of the laser head 110. Controlling the coordinates and the direction of the laser head 110 using the teaching data enables automatic multi-layer welding for the welding object 10.

The welding torch 210 is movably connected to the leaser head 110 by the torch moving mechanism 240 and arc-welds the welding object 10 (MIG welding or MAG welding).

The welding torch 210 has a tip part 211 and a main body part 212. The tip part 211 has an almost cylindrical shape, and reels out a welding wire WW from its end face and jets a shield gas G2. The main body part 212 has a reel-out mechanism (not illustrated) that reels out the welding wire WW and a flow path for the shield gas G2.

To the welding wire WW, a high voltage is applied from the welding source 220. As a result, an arc discharge is generated between the tip of the welding wire WW and the welding object 10 to melt the welding wire WW, thereby arc-welding the processing point of the welding object 10. A pool PL2 of the melted welding wire WW is formed and mixed with the material of the welding object 10 (the pool PL1 made by being melted by the laser light) to form a bead.

Here, the welding object 10 is melted by the laser light and then arc-welded, so that penetration of the formed bead and the welding object 10 becomes excellent. In other words, incomplete fusion at the side parts 16 of the groove 13 and between layered beads is reduced.

Using only an inert gas (Ar or the like) (inert gas 100%) as the shield gas G2, MIG (Metal Inert Gas) arc welding can be performed to form a bead in a non-oxidized state. This eliminates the need to remove an oxide film between passes during the multi-layer welding. As a result, the welding time is reduced to improve the working efficiency. Further, since the bead is not oxidized, a reduction in strength of a coupling due to oxidation can be prevented.

Using only an inert gas (Ar or the like) as the shield gas G2 (MIG arc welding) may cause the arc discharge instable as compared with the MAG welding. The reason is as follows. That is, in the MAG welding or the like, a continuous oxide film is formed on the surface of the base material by oxygen or the like in the shield gas G2, and the oxide film stabilizes a cathode spot. In contrast, in the MIG welding, many small cathode spots are formed, and the cathode spots move at a high speed on the surface of an electrode and are difficult to stabilize.

However, in this embodiment, the cathode points become difficult to move due to the pool PL1 formed in the groove 13 by the laser light preceding the MIG arc, and the cathode points of the MIG arc stabilize. As a result, even if the shield gas G2 is composed of only the insert gas, the MIG arc can be stabilized.

In a bead on test of comparing the presence/absence of laser, it is confirmed that an MIG bead in the presence of laser has a small bead kink as compared with an MIG bead in the absence of laser.

Note that a swing mechanism may be provided at the welding torch 210 to swing the arc in the width direction (Y-axis direction) of the groove 13. The MIG arc, even if slightly wobbling, can melt the side parts 16 of the groove 13.

Note that in addition to the inert gas (Ar or the like), an oxidizing gas ($CO_2$ or $O_2$) is contained in the shield gas G2, whereby MAG (Metal Active Gas) arc welding is performed to stabilize the arc discharge. O ions ionized from $CO_2$ or $O_2$ stabilize the cathode points of arc.

The welding source 220 is a high voltage power supply for applying a high voltage to the welding wire WW to generate an arc discharge between the welding wire WW and the welding object 10. The power control unit 230 controls the welding source 220 to adjust the voltage and the like to be applied to the welding wire WW

The torch moving mechanism 240 connects the welding torch 210 to the laser head 110 to be movable. The torch moving mechanism 240 has arms 241, 243, 245 and tables 242, 244, 246. The torch moving mechanism 240 functions as an "interval adjusting mechanism that adjusts the interval between the laser head and the welding torch".

The arm 241 has one end fixed to the laser head 110. The table 242 is connected to the other end of the arm 241 to be movable in the Y-axis direction. The arm 243 has one end connected to the table 242 and is movable with respect to the arm 241 by means of the table 242. The table 244 is connected to the arm 243 to be movable in the X-axis direction. The arm 245 is connected to the table 244 and is movable with respect to the arm 243 by means of the table 244. The table 246 is connected to the arm 245 to be movable in the Z-axis direction.

The welding torch 210 is connected to the table 246. As a result, the welding torch 210 is relatively movable with respect to the laser head 110 by means of the torch moving mechanism 240. The torch moving mechanism 240 includes a motor (not illustrated) that enables such movement and a detector (not illustrated) that detects the position.

The torch position control unit 250 controls the torch moving mechanism 240 and thereby can change the position of the welding torch 210 (welding wire WW) with respect to the laser head 110. In other words, a length LL between the processing point P1 by the laser and a processing point P2 by the arc welding can be adjusted. For example, the length LL is adjusted according to the processing point beam diameter W.

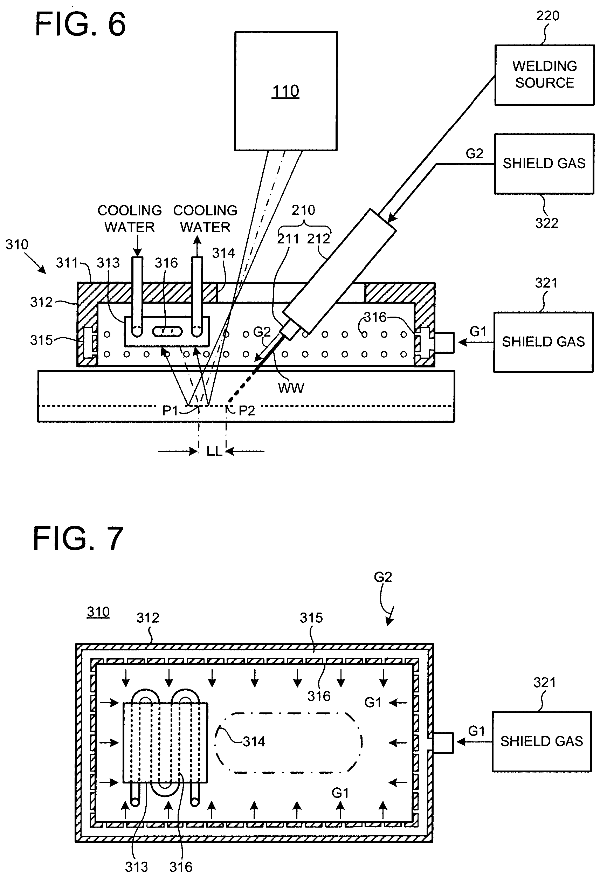

Fig. 6 and Fig. 7 are a longitudinal sectional view and a transverse sectional view of the shield member 310. The shield member 310 covers the surroundings of the processing points P1, P2 and is fill with the shield gas G1 to prevent the oxidation and so on of the welding object 10. Further, the shield member 310 receives the laser light reflected from the welding object 10 to prevent the laser light from leaking to its surroundings.

The shield member 310 can be used while being attached to the laser head 110 or the welding torch 210 as necessary. Further, the shield member 310 can also be attached to be movable with respect to the laser head 110 by means of a moving mechanism. For example, when moving the laser head 110 in the Z-axis direction with respect to the welding object 10, it is more preferable to make the laser head 110 and the shield member 310 individually movable depending on the moving amount.

The shield member 310 has an upper plate 311, four side plates 312, and a light blocking member 313. The upper plate 311 has an opening 314 to allow incidence of the laser light from the laser head 110 and insertion of the welding torch 210 thereinto.

The four side plates 312 have a flow path 315, and a plurality of jet ports 316. The flow path 315 is provided inside the side plates 312 and allows the shield gas G1 to flow in and flow out. The of jet ports 316 are provided in inner side surfaces of the side plates 312 and jet the shield gas G1 in the flow path 315 into the shield member 310. In other words, the inside of the shield member 310 is filled with the shield gas G1 flowed into the shield member 310 so that the oxidation of the welding object 10 is prevented.

The upper plate 311 and the four side plates 312 function as a "cover covering the processing point by the laser light and the processing point by the arc welding".

The shield gas G1 filling the inside of the shield member 310 is discharged from the bottom of the shield member 310 (the clearance between the shield member 310 and the welding object 10) and the opening 314. The shield gas G1 is continuously supplied, jetted to the shield member 310, and then discharged to the outside.

The light blocking member 313 is a member in an almost parallelepiped shape composed of metal such as copper. The light blocking member 313 receives the laser light reflected from the welding object 10 to prevent the laser light from leaking to the outside of the shield member 310.

The light blocking member 313 has a flow path 316 for a cooling water therein. Making the cooling water flow into/flow out of the flow path 316 restricts an increase in temperature due to inflow of heat caused by absorption of the laser light. If the light blocking member 313 is not cooled, the light blocking member 313 may melt due to the laser light.

The shield gas supply units 321, 322 supply the shield gases G1, G2 to the shield member 310 and the welding torch 210 respectively. The shield gases G1, G2 can be the same kind. As has been described, in the case of the MIG welding, only the inert gas can be used for the shield gas G2, and both of the shield gases G1, G2 can be composed of only the inert gas. In this case, the shield gas supply units 321, 322 are made to be used in common so that a single shield gas supply part can be used.

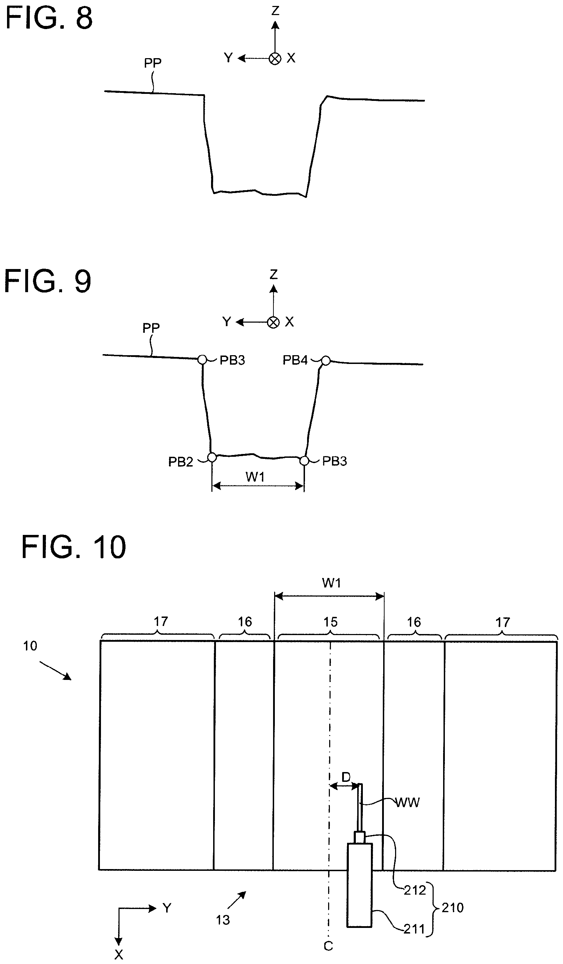

The distance meter 330, which is, for example, a laser distance meter, is attached to the shield member 310 and can measure the shape (profile) of the groove 13 of the welding object 10. The shape (profile) of the groove 13 on a plane vertical to the direction of the groove 13 (a YZ plane if the direction of the groove is the Z-axis direction). For example, by scanning the laser light in the Y-axis direction and measuring the change in distance, the shape of the groove can be measured. Fig. 8 is a view illustrating a profile PP of the groove 13 measured by the distance meter 330.

According to the present invention, the groove width detecting unit 340 detects the groove width W1 on the basis of the measurement result by the distance meter 330. A plurality of locations (bent points) where the profile of the groove greatly bends are extracted and the interval between the plurality of locations is calculated, whereby the groove width W1 can be detected. The groove width detecting unit 340 functions as a width detecting unit that detects the width of the groove.

Fig. 9 indicates bent points PB1 to PB4 extracted from the profile PP of the groove 13. A pair of bent points PB2, PB3 arranged at lower positions on the Z-axis correspond to the boundary between the bottom part 15 and the side parts 16 of the groove 13. In other words, the distance between the bent points PB2 and PB3 corresponds to the groove width W1.

Since the groove width W1 varies due to, for example, the progress of the multi-layer welding or the like as has been described, it is preferable to detect the groove width W1. Changing the processing point beam diameter W according to the detected groove width W1 makes it possible to perform successful welding such as penetration.

The imaging device 350 is, for example, a CCD (charge-coupled device) camera, takes a photograph of the welding object 10 and the welding wire WW, and then sends its image data to the welding position detecting unit 360. Fig. 10 illustrates an example of the image data from the imaging device 350. The positional relationship between the groove 13 and the welding wire WW is illustrated.

The welding position detecting unit 360 finds the positional relationship between the groove 13 and the welding wire WW, more specifically, a distance D between a center C of the groove 13 and the tip of the welding wire WW on the basis of the image data sent from the imaging device 350. The welding position detecting unit 360 functions as a "positional relationship detecting unit that detects the positional relationship between the center of the groove and the welding wire".

For example, the boundary lines between the bottom part 15 and the side parts 16 of the groove 13 and the contour of the welding wire WW are found by extracting the boundaries between bright and dark regions in the image data. A location at equal intervals from the boundary lines is the center line C of the groove 13. The distance D between center line C of the groove 13 and the contour of the welding wire WW can be calculated on the image.

The groove width W1 can be found using the boundary lines between the bottom part 15 and the side parts 16. More specifically, the groove width W1 can be found using, in place of the data on the profile by the distance meter 330, the image data from the imaging device 350. In this case, the distance meter 330 can be made unnecessary.

According to the present invention, the main control device 400 controls the whole welding system 100, especially, the beam diameter (processing point beam diameter W) of the laser and the welding position. The main control device 400 has a beam diameter deciding unit 410, a beam diameter adjusting unit 420, and a welding position adjusting unit 430.

The beam diameter deciding unit 410 decides the processing point beam diameter W on the basis of the groove width W1 detected by the groove width detecting unit 340. The beam diameter deciding unit 410 stores a table (correspondence data) representing the correspondence between the groove width W1 and the processing point beam diameter W and decides the processing point beam diameter W from the groove width W1 and the table.

The beam diameter adjusting unit 420 instructs the robot control unit 150 on the basis of the processing point beam diameter W decided by the beam diameter deciding unit 410. More specifically, the beam diameter adjusting unit 420 decides the height in the Z-axis direction of the laser head 110 and instructs the robot control unit 150. As a result, the defocusing length L is changed, whereby the processing point beam diameter W of the laser is adjusted.

The welding position adjusting unit 430 decides the length LL between the processing points P1 and P2 on the basis of the processing point beam diameter W decided by the beam diameter deciding unit 410 and instructs the torch position control unit 250. The welding position adjusting unit 430 stores a table (correspondence data) representing the correspondence between the processing point beam diameter W and the length LL and decides the length LL from the processing point beam diameter W and the table.

The welding position adjusting unit 430 instructs the torch position control unit 250 to set the length LL between the processing points P1 and P2 to a decided value.

Further, the welding position adjusting unit 430 instructs the torch position control unit 250 to make the positional relationship between the groove 13 and the welding wire WW detected by the welding position detecting unit 360 appropriate. In other words, the welding position adjusting unit 430 instructs the torch position control unit 250 to make the distance D between the center C of the groove 13 and the tip of the welding wire WW close to 0. The welding position adjusting unit 430 functions as a position adjusting unit that adjusts the position of the welding torch on the basis of the detected positional relationship.

(Procedure of Welding)

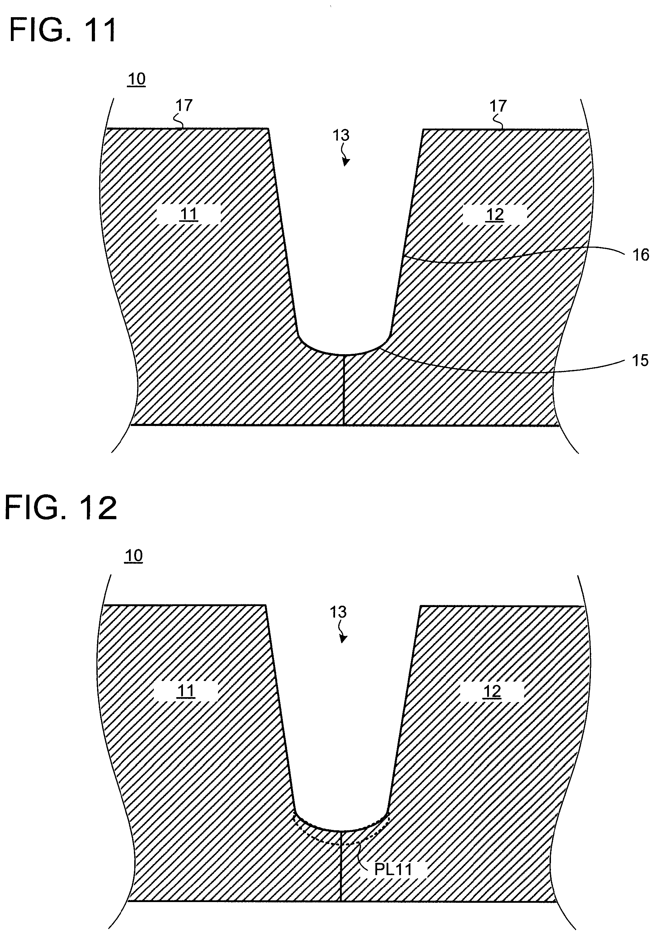

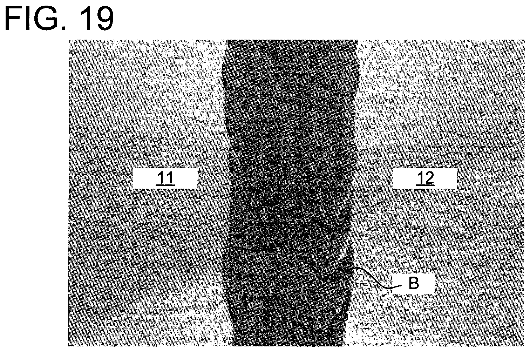

A procedure of welding by the welding system 100 will be described. Fig. 11 to Fig. 18 are cross-sectional views illustrating the welding object 10 during welding processing. Fig. 11 illustrates the welding object 10 before welding, and Fig. 12 to Fig. 18 illustrate the welding object 10 changed with progress of the welding. Besides, Fig. 19 is a cross-sectional photograph showing the welding object 10 after welding.

1. Welding of First Layer

(1) Melting by Laser (Fig. 11, Fig. 12)

The laser head 110 radiating the laser light is moved by the robotic device 140. Along the groove 13 of the welding object 10, laser light with a processing point beam diameter W larger than the groove width W1 is moved. As a result, the bottom part 15 and portions of the side pats 16 of the groove 13 are partially melted to from a pool PL11.

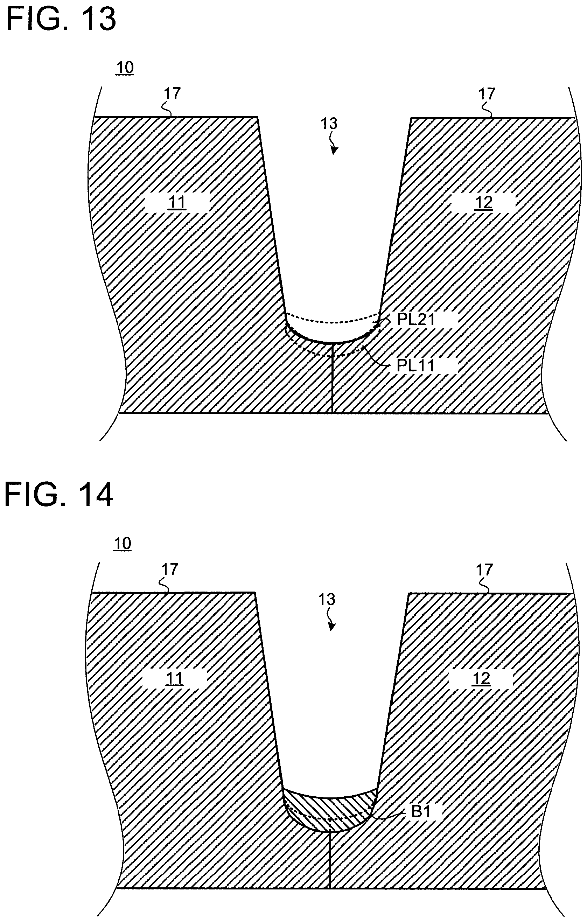

(2) Arc Welding (Fig. 13, Fig. 14)

The welding torch 210 is fixed to the laser head 110 by the torch moving mechanism 240. In this event, the length LL between the processing point P1 of the laser and the processing point P2 of the arc welding is set, for example, 3 mm to 10 mm.

The shield gas G2 is jetted and the welding torch 210 to which a high voltage is applied is moved together with the laser head 110 by the robotic device 140. More specifically, subsequent to the irradiation of the laser light, arc welding is performed, whereby a pool PL21 is formed on the pool PL11. The pool PL11 and the pool PL21 are united together and cooled to form into a bead B1.

Here, the welding object 10 is melted by the laser light and then subjected to arc welding, resulting in successful penetration between the bead B1 and the welding object 10. In particular, using the laser light with the processing point beam diameter W larger than the groove width W1 results in successful penetration at the side parts 16 of the groove 13.

Besides, the cathode points of arc are stabilized by the pool PL11, so that even if the shield gas G2 is composed of only the insert gas, the arc can be stabilized.

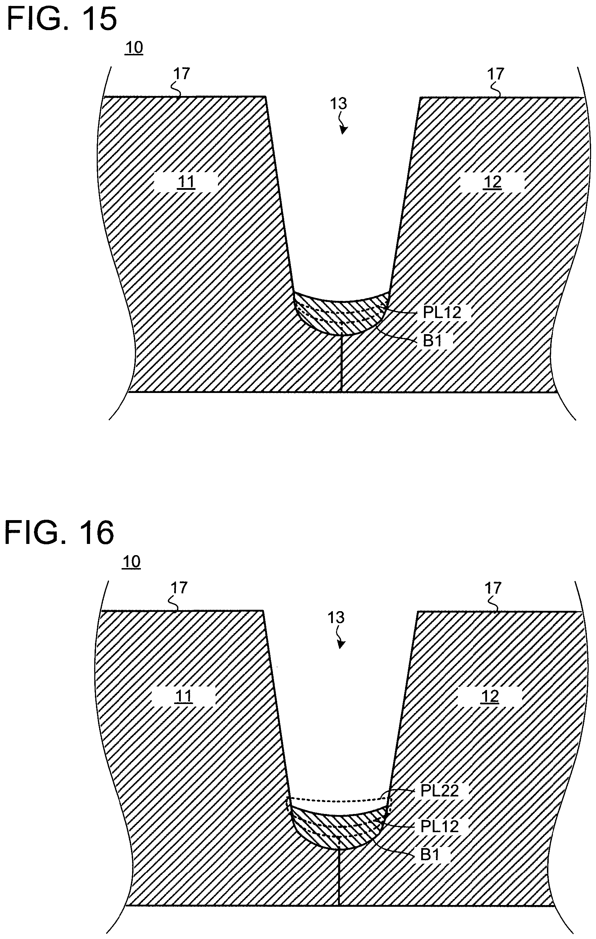

2. Welding of Second and Subsequent Layers (Fig. 15 to Fig. 18)

(1) Detection of Groove Width W1, and Distance D between Groove Center C and Welding Wire WW

The groove width W1 and the distance D between the groove center C and the welding wire WW are detected. As has been described, the groove width W1 and so on may change with progress of the welding.

The detection may be performed in parallel with or separately from the welding. In the case where they are detected in parallel with the welding, the groove width W1 and so on are detected before the processing point P1 during the movement (scanning) of the laser head 110 for the welding. Besides, in the case where they are detected separately from the welding, the distance meter 330 and the imaging device 350 are operated along the groove with the welding operation by the laser head 110 and the welding torch 210 stopped, to detect the changes in the groove width W1 and the distance along the groove.

(2) Melting by Laser (Fig. 15)

The length (length LL) between the laser head 110 and the welding object 10 in the Z-axis direction is adjusted to make a processing point beam diameter W according to the groove width W1. Further, the laser output is adjusted to accord to the processing point beam diameter W. The laser head 110 radiating the laser light is moved by the robotic device 140. Along a welding line of the welding object 10, the laser light with a processing point beam diameter larger than the groove width is moved. As a result, the bottom part 15 and portions of the side pats 16 of the groove 13 are melted to from a pool PL12.

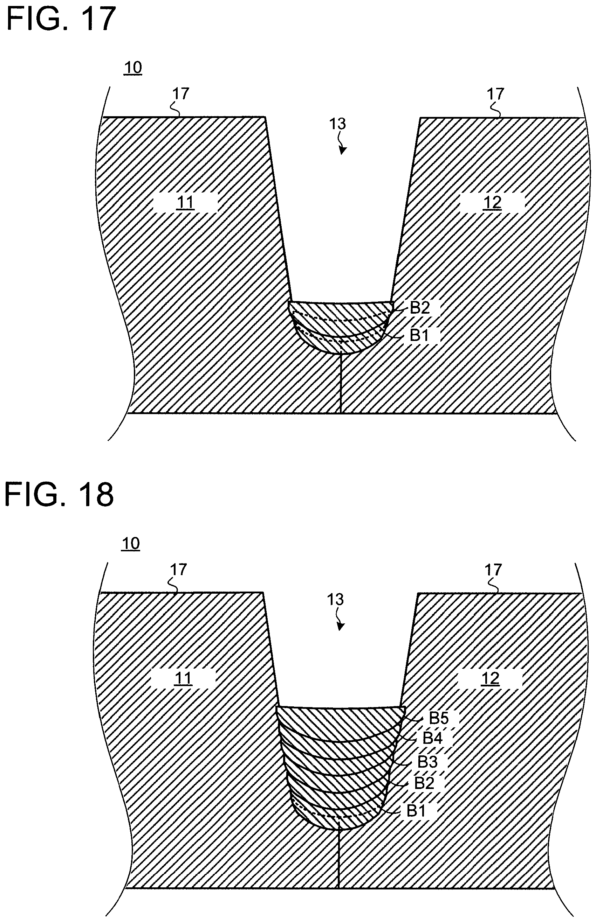

(3) Arc Welding (Fig. 16, Fig. 17)

Subsequent to irradiation of the laser light, arc welding is performed, whereby a pool PL22 is formed on the pool PL12. The pool PL12 and the pool PL22 are united together and cooled to form into a bead B2.

Here, the bead B1 is melted by the laser light and then subjected to arc welding, resulting in successful penetration between the beads B1 and B2. In particular, using the laser light with the processing point beam diameter W larger than the groove width W1 results in successful penetration of the beads B1 and B2 at the side parts 16 of the groove 13.

The irradiation of the laser light and the arc welding are repeated (a plurality of passes of welding) to thereby repeat the one pass-one layer welding, thereby making it possible to form a plurality of beads B1 to B5 as illustrated in Fig. 18 (multi-layer welding by the one pass-one layer welding). This enables welding excellent in penetration between the welding object 10 and the beads B1 to B5 (in particular, the side parts 16 of the groove 13).

It was confirmed that the penetration was excellent also at the side parts 16 of the groove 13 in the actual welding as illustrated in Fig. 19.

As described above, the laser light having a processing point beam diameter W made larger than the groove width W1 is made to precede the MIG arc to melt the side parts 16 of the groove 13 and the bead of the preceding pass in this embodiment. As a result, welding excellent in penetration becomes possible.

Further, when using 100% Ar is used as the shield gas, the bead is not oxidized, thus eliminating the need for an oxide film removal processing between passes. The welding time is reduced and the working efficiency can also be improved. Besides, since the bead is not oxidized, a reduction in strength of a coupling due to oxidation can be prevented.

(Examples)

Stainless steel plates having a groove width W1 = 8 mm, a groove angle $\theta 1$ = 2 to 6°, and a groove depth H1 = 30 mm were subjected to narrow groove multi-layer butt welding. Laser light having a processing point beam diameter W made larger by +2 to 6 mm than the groove width W1 and an energy density of 6000 to 40000 W/cm$^2$ was made to precede. The laser light melts the sides parts 16 of the groove 13 and the bead in the preceding pass. Then, the MIG arc is made subsequent thereto at a position away about a length LL = 3 mm to 10 mm from the laser light. This results in no incomplete fusion, thereby making it possible to perform stable arc welding and multi-layer stacking.

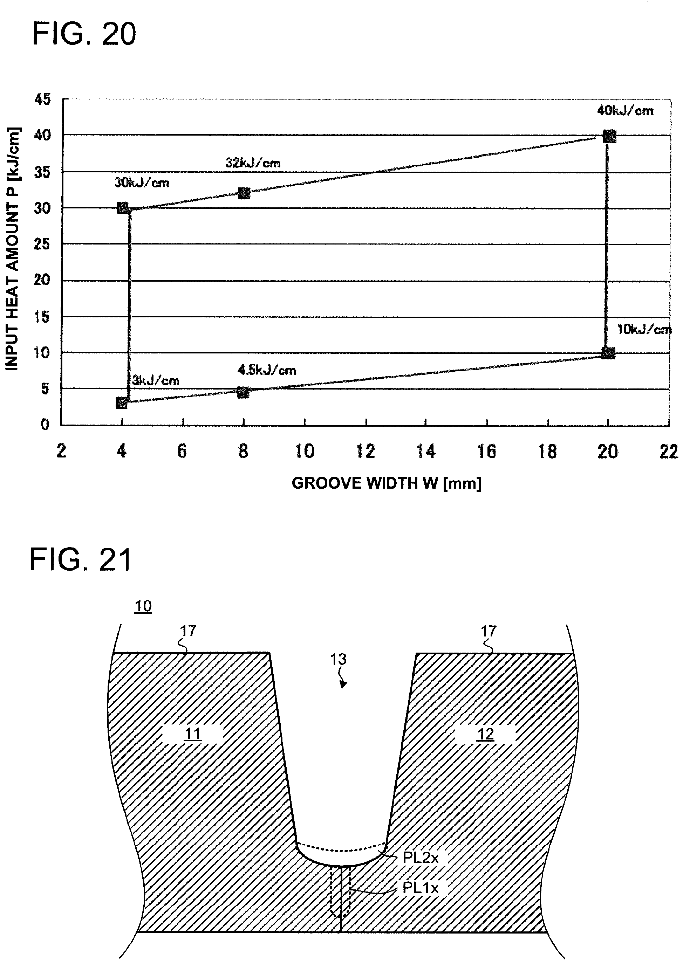

Here, the relationship between the groove width W1 and a total input heat amount P (a sum of input heat amounts of both of the laser light and the arc welding) will be described. Fig. 20 illustrates an example of a preferable range of the total input heat amount P with respect to the groove width W1. In this example, it is found that in the case of the groove width W1 = 8 mm, a total input heat amount P of 4.5 to 32 [kJ/cm] is preferable. With the total input heat amount P in this range, the stable arc welding was possible without incomplete fusion.

The main process is the MIG welding and the sub-process is the laser welding in this welding method, and addition of the laser welding being the sub-process to the MIG welding being the main process can contribute to increases in the bead width and the penetration depth. For example, when the welding is performed only by MIG under the conditions that a welding speed is 60 cm/min, an MIG current is 250 A, and an MIG voltage is 21V, the bead width is 9 mm and the penetration depth is 1 mm When adding the laser welding being the sub-process thereto, it was confirmed that the bead width increased up to 12 mm and the penetration depth increased up to 3 mm

By this welding method, a high welding speed such as a stacking thickness of about 3 to 5 mm and a welding amount of 70 to 140 g/min by one pass could be secured.

(Comparative Example 1)

As Comparative Example 1, it is considered to perform the MIG welding after irradiation of the laser light with the beam narrowed (for example, a processing point beam diameter = $\phi 0.2$ to $\phi 0.6$ mm). In this case, narrowing the processing point beam diameter W brings the laser light into a state of so-called keyhole welding, so that a keyhole type pool (narrow and deep pool) is formed. Before the pool is solidified, the MIG arc welding is performed.

Fig. 21 is a cross-sectional view illustrating the welding object 10 during welding processing according to Comparative Example. A pool PL2x by the MIG arc is formed on a pool PLIx by the laser. It is found that the side parts 16 of the groove 13 are not irradiated with the laser and the penetration tends to be insufficient at the side parts 16. Furthermore, since the keyhole-type pool PLIx is thin and deep, the Ar gas is difficult to escape and blowholes tend to arise. Therefore, when performing the multi-layer welding by the technique in Comparative Example 1, it is necessary to select a shield gas of a kind to dissolve in the base material.

Here, the processing is considered to be performed in the order of the laser and the MIG arc and even if the order is reversed, the fact remains that the side parts 16 are not irradiated with the laser and the penetration tends to be insufficient at the side parts 16.

(Comparative Example 2)

As Comparative Example 2, TIG welding is considered. It is difficult to achieve a sufficient high welding speed in the TIG welding. It cannot be said that the welding efficiency is sufficient because, for example, the welding speed is 8 cm/min and the stack thickness per layer is about 3 mm. Besides, since the input heat is large as compared with the MIG arc (the TIG welding: about 15,000 J/cm, the MIG welding: about 7000 J/cm), a deformation amount due to the welding may tend to become large.

In contrast to the above Comparative Examples 1,2, the technique of the embodiment can secure penetration suitable for the multi-layer welding, the welding efficiency and so on. Making the laser light having the processing point beam diameter W made larger than the groove width W1 preceding the MIG arc as has been described enables welding excellent in penetration also at the side parts 16 of the groove 13. Further, securement of the sufficient welding speed is easy.

Besides, in the welding deformation in the bead-on type narrow groove test with a plate thickness of 40 mm and a groove depth of 30 mm, a lateral shrinkage amount can be suppressed by using this welding method and conditions such that a lateral shrinkage amount is approximately 2 mm under this welding conditions in contrast to a lateral shrinkage amount of 4 mm by the TIG welding.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the present invention as defined in the appended claims.

**Claims**

1.  A welding system comprising:

    a pair of welding objects (10) butted against each other with a groove (13) between the welding objects (10);
    a laser head (110) configured to emit laser light;
    a welding torch (210) configured to apply a voltage to a welding wire (WW) to perform arc welding;
    being **characterised by**:

    main control device (400) comprising a beam diameter deciding unit (410), a beam diameter adjusting unit (420), and a welding position adjusting unit (430),
    a distance meter (330) configured to measure the shape of the groove (13) of the welding objects;
    a groove width detecting unit (340) configured to detect the groove width W1 on the basis of the measurement result by the distance meter (330);
    the beam diameter deciding unit (410) configured to decide the processing point beam diameter W on the basis of the groove width W1 detected by the groove width detecting unit (340), such that the laser light has a processing point beam diameter larger than a width of the groove (13), so that the laser light melts a bottom part (15) and side parts (16) of the groove (13) and the melted inside of the groove (13) is arc-welded by the welding torch (210) to form a weld bead;
    the beam diameter adjusting unit (420) configured to decide the height in the Z-axis direction of the laser head (110) ;
    the welding position adjusting unit (430) configured to decide the length LL between the processing points P1 and P2 on the basis of the processing point beam diameter W decided by the beam diameter deciding unit (410);
    an interval adjusting mechanism (240) configured to adjust an interval between the laser head (110) and the welding torch (210) according to the instructions provided by the welding position adjusting unit 430; and
    a moving unit (140) configured to move the laser head (110) and the welding torch (210) with the interval there between adjusted, along the groove (13).

2.  The welding system according to claim 1, wherein the beam diameter adjusting unit (420) is configured to adjust the processing point beam diameter of the laser light on the basis of the detected width of the groove (13).

3. The welding system according to claim 1, further comprising:

   a positional relationship detecting unit (360) configured to detect a positional relationship between a center of the groove (13) and the welding wire (WW); and
   wherein the welding position adjusting unit (430) is configured to adjust a position of the welding torch (210) on the basis of the detected positional relationship.

4. The welding system according to claim 1, further comprising:

   a cover (310, 311, 312) configured to cover a processing point by the laser light and a processing point by the arc welding;
   a gas supply unit (321, 322) configured to supply a shield gas into the cover 310, 311, 312);
   a light blocking member (313) configured to receive laser light reflected from the welding object (10); and
   a cooling mechanism (316) configured to cool the light blocking member.

5. The welding system according to claim 1,
   wherein the arc welding is MIG arc welding.

6. The welding system according to claim 1,
   wherein a length between a processing point by the laser light and a processing point by the arc welding is 3 mm or more to 10 mm or less.

7. The welding system according to claim 1,
   wherein the welding object (10) is one of stainless steel, carbon steel, low-alloy steel, and non-ferrous alloy.

8. A welding method comprising:

   moving a processing point by laser light along a groove (13) between a pair of welding objects (10), butted against each other with a narrow groove between the welding objects (10), to melt an inside of the groove (13); and
   moving a processing point by arc discharge from a welding wire (WW) to which a voltage is applied, along the groove (13) to arc-weld the inside of the groove (13) melted by the laser light to form a weld bead;
   being **characterised in that**
   the laser light has a processing point beam diameter larger than a width of a groove (13), so that the laser light melts a bottom part (15) and side parts (16) of the groove (13) and the melted inside of the groove (13) is arc-welded by the welding torch (210) to form a weld bead.

9. The welding method according to claim 8, further comprising:

   melting the inside of the groove (13) having the weld bead by the laser light having the processing point beam diameter larger than the width of the groove (13); and
   arc-welding the melted inside of the groove (13) to form a second weld bead on the weld bead.

10. The welding method according to claim 8,
    wherein a length between the processing point by the laser light and the processing point by the arc welding is 3 mm or more to 10 mm or less.

11. The welding method according to claim 8,
    wherein the arc welding is MIG arc welding.

**Patentansprüche**

1. Ein Schweißsystem umfassend:

   ein Paar von Schweißobjekten (10), die aneinander stoßen, mit einer Nut (13) zwischen den Schweißobjekten (10); einem Laserkopf (110), der zum Emittieren von Laserlicht konfiguriert ist;
   einem Schweißbrenner (210), der zum Anlegen einer Spannung an einen Schweißdraht (WW) konfiguriert ist, um ein Lichtbogenschweißen durchzuführen;

**gekennzeichnet durch**:

eine Hauptsteuervorrichtung (400), die eine Strahldurchmesser-Bestimmungseinheit (410), eine Strahldurchmesser-Einstelleinheit (420) und eine Schweißpositions-Einstelleinheit (430) umfasst,

einen Abstandsmesser (330), der zum Messen der Form der Nut (13) der Schweißobjekte konfiguriert ist;

eine Nutbreitenerfassungseinheit (340), die zum Erfassen der Nutbreite W1 auf der Grundlage des Messergebnisses durch den Abstandsmesser (330) konfiguriert ist;

die Strahldurchmesser-Bestimmungseinheit (410), die zum Bestimmen des Bearbeitungspunkt-Strahldurchmessers W auf der Basis der Nutbreite W1 konfiguriert ist, die von der Nutbreiten-Erfassungseinheit (340) erfasst wird, so dass das Laserlicht einen Bearbeitungspunkt-Strahldurchmesser hat, der größer als eine Breite der Nut (13) ist, so dass das Laserlicht einen Bodenteil (15) und Seitenteile (16) der Nut (13) schmilzt und das geschmolzene Innere der Nut (13) durch den Schweißbrenner (210) lichtbogengeschweißt wird, um eine Schweißraupe zu bilden;

die Strahldurchmesser-Einstelleinheit (420), die zum Bestimmen der Höhe in Richtung der Z-Achse des Laserkopfes (110) konfiguriert ist;

die Schweißpositions-Einstelleinheit (430), die zum Bestimmen der Länge LL zwischen den Bearbeitungspunkten P1 und P2 auf der Basis des von der Strahldurchmesser-Bestimmungseinheit (410) bestimmten Bearbeitungspunkt-Strahldurchmessers W konfiguriert ist;

einen Intervall-Einstellmechanismus (240), der zum Einstellen eines Intervalls zwischen dem Laserkopf (110) und dem Schweißbrenner (210) gemäß den von der Schweißpositions-Einstelleinheit (430) bereitgestellten Anweisungen konfiguriert ist; und

eine Bewegungseinheit (140), die zum Bewegen des Laserkopfs (110) und des Schweißbrenners (210) mit dem dazwischen eingestellten Abstand entlang der Nut (13) konfiguriert ist.

2. Das Schweißsystem nach Anspruch 1 wobei
die Strahldurchmesser-Einstelleinheit (420) zum Einstellen des Bearbeitungspunkt-Strahldurchmessers des Laserlichts auf der Grundlage der erfassten Breite der Nut (13) konfiguriert ist.

3. Das Schweißsystem nach Anspruch 1, ferner umfassend:

eine Positionsbeziehungs-Erfassungseinheit (360), die zum Erfassen einer Positionsbeziehung zwischen einer Mitte der Nut (13) und dem Schweißdraht (WW) konfiguriert ist; und
wobei die Schweißpositions-Einstelleinheit (430) zum Einstellen einer Position des Schweißbrenners (210) auf der Grundlage der erfassten Positionsbeziehung konfiguriert ist.

4. Das Schweißsystem nach Anspruch 1, ferner umfassend:

eine Abdeckung (310, 311, 312), die zum Abdecken eines Bearbeitungspunkts durch das Laserlicht und eines Bearbeitungspunkts durch das Lichtbogenschweißen konfiguriert ist;
eine Gasversorgungseinheit (321, 322), die zum Einleiten eines Schutzgases in die Abdeckung (310, 311, 312) konfiguriert ist;
ein lichtblockierendes Element (313), das zum Empfang eines von dem Schweißobjekt (10) reflektierten Laserlichts konfiguriert ist; und
einen Kühlmechanismus (316), der zum Kühlen des lichtblockierenden Elements konfiguriert ist.

5. Das Schweißsystem nach Anspruch 1,
wobei das Lichtbogenschweißen ein MIG-Lichtbogenschweißen ist.

6. Das Schweißsystem nach Anspruch 1,
wobei eine Länge zwischen einem Bearbeitungspunkt durch das Laserlicht und einem Bearbeitungspunkt durch das Lichtbogenschweißen 3 mm oder mehr und 10 mm oder weniger beträgt.

7. Das Schweißsystem nach Anspruch 1,
wobei das Schweißobjekten (10) aus rostfreiem Stahl, einem Kohlenstoffstahl, einem niedrig legiertem Stahl oder einer Nichteisenlegierung ist.

8. Ein Schweißverfahren, das Folgendes umfasst:

Bewegen eines Bearbeitungspunktes durch Laserlicht entlang einer Nut (13) zwischen einem Paar von Schweißobjekten (10), die mit einer schmalen Nut zwischen den Schweißobjekten (10) aneinander stoßen, um eine Innenseite der Nut (13) zu schmelzen; und

Bewegen eines Bearbeitungspunktes durch Lichtbogenentladung von einem Schweißdraht (WW), an den eine Spannung angelegt ist, entlang der Nut (13), um die Innenseite der Nut (13), die durch das Laserlicht geschmolzen wurde, mit einem Lichtbogen zu schweißen, um eine Schweißraupe zu bilden;

**dadurch gekennzeichnet** das

das Laserlicht einen Bearbeitungspunkt-Strahldurchmesser hat, der größer als eine Breite einer Nut (13) ist, so dass das Laserlicht einen Bodenteil (15) und Seitenteile (16) der Nut (13) schmilzt und die geschmolzene Innenseite der Nut (13) durch den Schweißbrenner (210) lichtbogengeschweißt wird, um eine Schweißraupe zu bilden.

9. Das Schweißverfahren nach Anspruch 8, ferner umfassend:

Schmelzen der Innenseite der Nut (13) mit der Schweißraupe durch das Laserlicht, dessen Bearbeitungspunkt-Strahldurchmesser größer als die Breite der Nut (13) ist; und

Lichtbogenschweißen der geschmolzenen Innenseite der Nut (13), um eine zweite Schweißraupe auf der Schweißraupe zu bilden.

10. Das Schweißverfahren nach Anspruch 8,
wobei eine Länge zwischen dem Bearbeitungspunkt durch das Laserlicht und dem Bearbeitungspunkt durch das Lichtbogenschweißen 3 mm oder mehr und 10 mm oder weniger beträgt.

11. Das Schweißverfahren nach Anspruch 8,
wobei das Lichtbogenschweißen ein MIG-Lichtbogenschweißen ist.


**Revendications**

1. Système de soudage comprenant :

une paire d'objets à souder (10) en butée l'un contre l'autre, avec une fente (13) entre les objets à souder (10) ;
une tête laser (110) conçue pour émettre une lumière laser ;
un chalumeau soudeur (210) conçu pour appliquer une tension à un fil à souder (WW) pour réaliser un soudage à l'arc ;
**caractérisé par** :

un dispositif de commande principal (400) comprenant une unité de détermination de diamètre de faisceau (410), une unité d'ajustement de diamètre de faisceau (420) et une unité d'ajustement de position de soudage (430),
un télémètre (330) conçu pour mesurer la forme de la fente (13) des objets à souder ;
une unité de détection de largeur de fente (340) conçue pour détecter la largeur de fente W1 sur la base du résultat de mesure par le télémètre (330) ;
l'unité de détermination de diamètre de faisceau (410) conçue pour déterminer le diamètre de faisceau au point de traitement W sur la base de la largeur de fente W1 détectée par l'unité de détection de largeur de fente (340), de telle sorte que la lumière laser ait un diamètre de faisceau au point de traitement plus grand qu'une largeur de la fente (13), de sorte que la lumière laser fait fondre une partie inférieure (15) et des parties latérales (16) de la fente (13) et l'intérieur fondu de la fente (13) est soudé à l'arc par le chalumeau soudeur (210) pour former un cordon de soudure ;
l'unité d'ajustement de diamètre de faisceau (420) conçue pour déterminer la hauteur dans la direction de l'axe Z de la tête laser (110) ;
l'unité d'ajustement de position de soudage (430) conçue pour déterminer la longueur LL entre les points de traitement P1 et P2 sur la base du diamètre de faisceau au point de traitement W déterminé par l'unité de détermination de diamètre de faisceau (410) ;
un mécanisme d'ajustement d'intervalle (240) conçu pour ajuster un intervalle entre la tête laser (110) et le chalumeau soudeur (210) en fonction des instructions fournies par l'unité d'ajustement de position de soudage (430) ; et
une unité de déplacement (140) conçue pour déplacer la tête laser (110) et le chalumeau soudeur (210) avec l'intervalle entre eux ajusté, le long de la fente (13).

**2.** Système de soudage selon la revendication 1, dans lequel l'unité d'ajustement de diamètre de faisceau (420) est conçue pour ajuster le diamètre de faisceau au point de traitement de la lumière laser sur la base de la largeur détectée de la fente (13).

**3.** Système de soudage selon la revendication 1, comprenant en outre :

une unité de détection de relation de position (360) conçue pour détecter une relation de position entre un centre de la fente (13) et le fil à souder (WW) ; et
dans lequel l'unité d'ajustement de position de soudage (430) est conçue pour ajuster une position du chalumeau soudeur (210) sur la base de la relation de position détectée.

**4.** Système de soudage selon la revendication 1, comprenant en outre :

un cache (310, 311, 312) conçu pour recouvrir un point de traitement par la lumière laser et un point de traitement par le soudage à l'arc ;
une unité d'alimentation en gaz (321, 322) conçue pour fournir un gaz de protection dans le cache (310, 311, 312) ;
un élément de blocage de lumière (313) conçu pour recevoir une lumière laser réfléchie par l'objet à souder (10) ; et
un mécanisme de refroidissement (316) conçu pour refroidir l'élément de blocage de lumière.

**5.** Système de soudage selon la revendication 1,
dans lequel le soudage à l'arc est un soudage à l'arc MIG.

**6.** Système de soudage selon la revendication 1,
dans lequel une longueur entre un point de traitement par la lumière laser et un point de traitement par le soudage à l'arc est de 3 mm ou plus à 10 mm ou moins.

**7.** Système de soudage selon la revendication 1,
dans lequel l'objet à souder (10) est l'un parmi acier inoxydable, acier au carbone, acier faiblement allié et alliage non ferreux.

**8.** Procédé de soudage comprenant :

le déplacement d'un point de traitement par lumière laser le long d'une fente (13) entre une paire d'objets à souder (10), en butée l'un contre l'autre avec une fente étroite entre les objets à souder (10), pour faire fondre un intérieur de la fente (13) ; et
le déplacement d'un point de traitement par décharge en arc d'un fil à souder (WW) auquel une tension est appliquée, le long de la fente (13) pour souder à l'arc l'intérieur de la fente (13) fondu par la lumière laser pour former un cordon de soudure ;
**caractérisé en ce que**
la lumière laser a un diamètre de faisceau au point de traitement plus grand qu'une largeur d'une fente (13), de sorte que la lumière laser fait fondre une partie inférieure (15) et des parties latérales (16) de la fente (13) et que l'intérieur fondu de la fente (13) est soudé à l'arc par le chalumeau soudeur (210) pour former un cordon de soudure.

**9.** Procédé de soudage selon la revendication 8, comprenant en outre :

la fonte de l'intérieur de la fente (13) présentant le cordon de soudure au moyen de la lumière laser ayant le diamètre de faisceau au point de traitement plus grand que la largeur de la fente (13),
le soudage à l'arc de l'intérieur fondu de la fente (13) pour former un second cordon de soudure sur le cordon de soudure.

**10.** Procédé de soudage selon la revendication 8,
dans lequel une longueur entre le point de traitement par la lumière laser et le point de traitement par le soudage à l'arc est de 3 mm ou plus à 10 mm ou moins.

**11.** Procédé de soudage selon la revendication 8,
dans lequel le soudage à l'arc est un soudage à l'arc MIG.

## FIG. 1

FIG. 2

FIG. 3

FIG. 4

FIG. 5

## FIG. 6

## FIG. 7

## FIG. 8

PP

## FIG. 9

PP

PB3

PB4

PB2

PB3

W1

## FIG. 10

W1

17   16   15   16   17

10

D

WW

212
211
210

Y

X

13

C

FIG. 11

FIG. 12

## FIG. 13

## FIG. 14

## FIG. 15

## FIG. 16

## FIG. 17

## FIG. 18

FIG. 19

## FIG. 20

## FIG. 21

**EP 2 886 241 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011005533 A
- US 2004026388 A1
- JP 2007054879 A
- EP 226976481 A